# EUROPÄISCHE PATENTSCHRIFT

(11) **EP 4 275 103 B1**
(45) Veröffentlichungstag und Bekanntmachung des Hinweises auf die Patenterteilung: **04.12.2024**
(21) Anmeldenummer: 21794755.5
(22) Anmeldetag: 13.10.2021
(51) Int. Cl.: G05D 16/06

(54) **GASDRUCKREGLER**
GAS PRESSURE REGULATOR
RÉGULATEUR DE PRESSION DE GAZ

(30) Priorität: 11.01.2021 DE 102021000068
(43) Veröffentlichungstag der Anmeldung: 15.11.2023
(73) Patentinhaber: Truma Gerätetechnik GmbH & Co. KG, 85640 Putzbrunn (DE)
(72) Erfinder: ARMESTO-BEYER, Kai, 85640 Putzbrunn (DE)
(74) Vertreter: Prinz & Partner mbB
(86) Internationale Anmeldenummer: PCT/EP2021/000124
(87) Internationale Veröffentlichungsnummer: WO 2022/148522

(56) Entgegenhaltungen:
- WO-A1-2020/160948
- WO-A1-97/17641
- GB-A- 1 273 358
- GB-A- 2 518 599
- US-A- 3 488 685
- US-A- 4 069 839
- US-A1- 2019 155 316

## Beschreibung

Die vorliegende Erfindung betrifft einen Gasdruckregler.

Gasdruckregler sind beispielweise beschrieben in der DE 10 2019 103 201 A1 oder der WO 2020/030398 A1. Die Regler reduzieren den Gasdruck, der von einer Gasquelle stammt, auf einen Gasdruck für die nachgeordneten Verbraucher. Manche Regler verfügen über ein Überdruckventil, das in dem Fall eines zu hohen Drucks das Gas in die Umwelt ableitet. Regler mit Überdruckventilen beschreiben beispielsweise die US 3 488 685 A, die DE 551 843 A oder die GB 582,051 A. Dieser Überdruck liegt oberhalb des normal üblichen anliegenden Drucks. Für bestimmte Anwendungsfälle, z. B. für den Campingbereich, ist es vorgesehen, dass Dichtigkeitsprüfungen an den Gasdruckreglern und dem nachgeordneten Niederdrucksystem durchgeführt werden. Der dabei anliegende Druck liegt jedoch zumeist oberhalb des Drucks, bei dem das Überdruckventil reagiert.

Daher besteht die der Erfindung zugrundeliegende Aufgabe darin, einen Gasdruckregler vorzuschlagen, der über eine Art von Überdruckventil verfügt und der gleichzeitig einen Überdrucktest ermöglicht.

Die Erfindung löst die Aufgabe durch einen Gasdruckregler mit einem Einlass, einem Auslass, einem Gehäuse, einer Membran, einer Steuerkammer und einer Ablasskammer, wobei der Einlass und der Auslass jeweils auf die Steuerkammer münden, wobei die Membran die Steuerkammer teilweise begrenzt, wobei bei einer Position der Membran eine Passage zwischen der Steuerkammer und der Ablasskammer geöffnet ist, und wobei ein bewegliches Begrenzungselement vorhanden ist, welches eine Bewegung der Membran in einer Richtung begrenzt.

Der erfindungsgemäße Gasdruckregler verfügt über einen Einlass und einen Auslass, die jeweils auf eine Steuerkammer münden. In dieser Steuerkammer wird die Reduktion des anliegenden Gasdrucks auf den gewünschten Gasdruck vorgenommen. Für die Druckregelung ist die Membran vorhanden, die die Steuerkammer teilweise begrenzt, also einen Teil der Umwandung der Steuerkammer bildet. Die Membran ist dabei in dem Gehäuse des Gasdruckreglers beweglich angeordnet. Diese Beweglichkeit dient im normalen Betrieb der Druckregelung, indem das Volumen der Steuerkammer geändert wird. Bei einer Position der Membran ist eine Passage zwischen der Steuerkammer und einer Ablasskammer geöffnet. Strömt im normalen Zustand das Gas nur innerhalb der Steuerkammer, so kann durch die Positionierung der Membran ein Übergang zu einer Ablasskammer erzeugt werden. Die Ablasskammer ist dabei vorzugsweise mit der Außenwelt um den Gasdruckregler herum verbunden. Dadurch kann das Gas aus der Steuerkammer über die Ablasskammer in die Umwelt entweichen. Damit ist eine relativ einfache Reduktion des Überdrucks gegeben. Somit ist durch die Passage und die Ablasskammer die Funktion eines Überdruckventils gegeben. Ergänzend ist ein Begrenzungselement vorhanden. Das Begrenzungselement selbst ist beweglich. Dies dient dem Zweck, dass es aus einer Position in eine andere bewegt werden kann. Insofern das Begrenzungselement den Zweck hat, nur für eine Dichtigkeitsprüfung das Überdruckventil zu blockieren, ist es erforderlich, dass das Begrenzungselement nur temporär und insbesondere nur während des Tests aktiv ist. Daher ist die Beweglichkeit vorgesehen, sodass das Begrenzungselement wieder fortbewegt werden kann. Das Begrenzungselement dient dazu, eine Bewegung der Membran in einer Richtung zu begrenzen. Ist die Bewegung der Membran begrenzt, so ist damit vorzugsweise sichergestellt, dass die Passage zwischen Steuerkammer und Ablasskammer nicht geöffnet wird. Damit wird das Überdruckventil blockiert und der Drucktest kann durchgeführt werden.

Eine Ausgestaltung sieht vor, dass der Gasdruckregler weiterhin ein Steuerungselement aufweist, dass die Membran und das Steuerungselement derartig ausgestaltet und in dem Gehäuse derartig angeordnet sind, sodass die Membran und das Steuerungselement relativ zueinander beweglich sind, und dass bei einer relativen Ablass-Anordnung von Membran und Steuerungselement die Passage zwischen der Steuerkammer und der Ablasskammer geöffnet ist. In dieser Ausgestaltung ist die Position der Membran zum Öffnen der Passage durch die relative Ablass-Anordnung zwischen Membran und Steuerungselement gegeben. Der Druckregelung dient in dieser Ausgestaltung ergänzend das Steuerungselement, das in einer Ausgestaltung als eine Art von Stempel ausgeführt ist.

Eine Ausgestaltung sieht vor, dass das Begrenzungselement die Bewegung der Membran fort von der Steuerkammer begrenzt. In der Regel ist diese Bewegungsrichtung gegeben, wenn die Membran auf einen erhöhten Druck in der Steuerkammer reagiert. Damit ist dies auch die Richtung, in welcher sich die Membran soweit bewegt, bis das Überdruckventil aktiviert wird. Durch die Begrenzung der Bewegung der Membran in dieser Richtung ist es daher möglich zu verhindern, dass die Passage zwischen Steuer- und Ablasskammer geöffnet wird. Daher sind die Abmessungen und Geometrien jeweils so zu wählen und aufeinander abzustimmen, dass die Öffnung der Passage gerade nicht stattfinden kann.

Eine Ausgestaltung beinhaltet, dass das Steuerungselement durch die Membran hindurchragt, und dass sich die Passage zwischen dem Steuerungselement und der Membran öffnet. In dieser Ausgestaltung befindet sich das Steuerungselement in der Membran, wird also von der Membran - vorzugweise radial - umgeben. Zwischen Membran und Steuerungselement befindet sich dabei eine Öffnung, die im Normalfall durch die relative Position von Membran und Steuerungselement zueinander verschlossen ist. Nur wenn sich die Membran, beispielsweise durch einen Druckanstieg in der Steuerkammer, in einer gewissen Position relativ zum Steuerungselement in ihrer Mitte begibt, so öffnet sich die Passage.

In einer Ausgestaltung verfügen die Membran und das Steuerungselement über Strukturen, die in einer relativen Anordnung sich so überlagern oder ergänzen, dass die Passage geschlossen ist. Wenn sich jedoch der Abstand zwischen Membran und Steuerungselement ausreichend vergrößert, so greifen die Strukturen nicht mehr ineinander ein bzw. ergänzen sich nicht mehr und die Passage zwischen den beiden Komponenten wird geöffnet. Damit kann das Gas in die Ablasskammer strömen.

Eine Ausgestaltung sieht vor, dass das Begrenzungselement zwischen einer aktiven und einer inaktiven Position bewegbar ist, und dass das Begrenzungselement die Bewegung der Membran nur in der aktiven Position begrenzt. Das Begrenzungselement lässt sich in dieser Ausgestaltung zwischen zwei Positionen bewegen. Dabei begrenzt das Begrenzungselement nur in einer aktiven Position die Membran in ihrer Bewegung und sonst nicht. In einer Ausgestaltung ist vorgesehen, dass die aktive Position durch einen Hinweis für den Nutzer deutlich angezeigt wird.

Eine Ausgestaltung besteht darin, dass das Begrenzungselement zwischen der aktiven und der inaktiven Position drehbar um das Steuerungselement ausgestaltet und angeordnet ist. Alternativ oder ergänzend sieht es eine Ausgestaltung vor, dass das Begrenzungselement zwischen der aktiven und der inaktiven Position radial zum Steuerungselement verschiebbar ausgestaltet und angeordnet ist. Alternativ oder ergänzend besteht eine Ausgestaltung darin, dass das Begrenzungselement zwischen der aktiven und der inaktiven Position axial entlang dem Steuerungselement drehbar und/oder verschiebbar ausgestaltet und angeordnet ist. Gemein ist den vorgenannten Ausgestaltungen, dass das Begrenzungselement jeweils einer mechanischen Bewegung unterzogen wird, durch die es aktiviert bzw. de-aktiviert werden kann.

Eine Ausgestaltung beinhaltet, dass ein Hebel und ein Dichtelement beweglich in dem Gehäuse angeordnet sind, dass sich das Dichtelement zwischen dem Einlass und der Steuerkammer befindet, und dass der Hebel mit dem Steuerungselement mechanisch kontaktiert ist. Diese Art von Gasdruckregler ist beispielsweise in den eingangs genannten Dokumenten DE 10 2019 103 201 A1 oder WO 2020/030398 A1 offenbart.

Im Einzelnen gibt es eine Vielzahl von Möglichkeiten, den Gasdruckregler auszugestalten und weiterzubilden. Dazu wird verwiesen einerseits auf die dem unabhängigen Patentanspruch nachgeordneten Patentansprüche, andererseits auf die folgende Beschreibung von Ausführungsbeispielen in Verbindung mit der Zeichnung. Es zeigen:
- Fig. 1: einen Schnitt durch eine Ausgestaltung eines Gasdruckreglers gemäß dem Stand der Technik,
- Fig. 2: einen Schnitt durch eine erste Ausgestaltung eines Gasdruckreglers gemäß der Erfindung mit einem inaktiven Begrenzungselement in einer ersten Phase,
- Fig. 3: den Gasdruckregler der Fig. 2 mit einem aktiven Begrenzungselement in einer zweiten Phase,
- Fig. 4: einen Schnitt durch eine zweite Ausgestaltung eines erfindungsgemäßen Gasdruckreglers mit einem inaktiven Begrenzungselement in einer ersten Phase und
- Fig. 5: den Gasdruckregler der Fig. 4 mit einem aktiven Begrenzungselement in einer zweiten Phase.

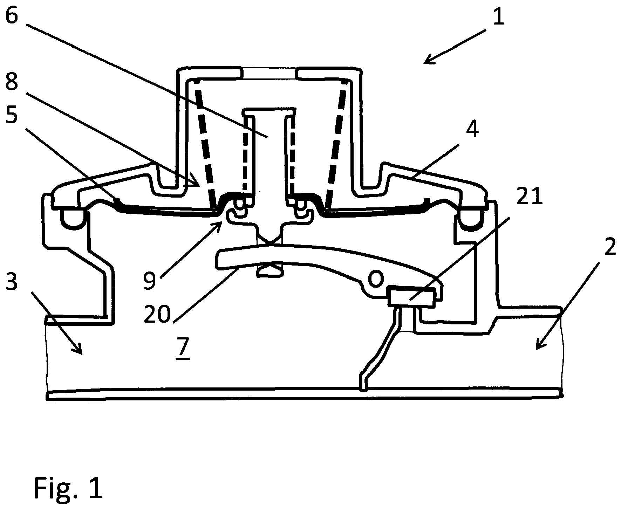

Die Fig. 1 zeigt einen Schnitt durch einen Gasdruckregler 1 gemäß dem Stand der Technik. Zwischen einem Einlass 2 und einem Auslass 3 für das Gas befindet sich innerhalb des Gehäuses 4 des Reglers 1 eine Steuerkammer 7, die auf der oberen Seite durch eine bewegliche Membran 5 begrenzt wird. Die Membran 5 umgibt dabei ein stempelförmiges Steuerungselement 6, das mittig durch die Membran 5 hindurchragt. Der Druckregelung dienen dabei die Membran 5 und die Möglichkeit, durch sie das Volumen der Steuerkammer 7 zu verändern, sowie das Steuerungselement 6, das mit einem Hebel 20 verbunden ist. Auf der Seite der Ablasskammer 8 ist die Membran 5 mit einer Feder belastet, die die Membran 5 in Richtung der Steuerkammer 7 drückt. Der Hebel 20 ist dabei drehbar in dem Gehäuse 4 gelagert und verschließt über ein Dichtelement 21 den Einlass 2 hinein in die Steuerkammer.

Für den - hier dargestellten - Fall, dass der anliegende Gasdruck zu groß wird, ist eine Art von Überdruckventil vorgesehen. Steigt der Druck an, so entfernt sich die Membran 5 fort von der Steuerkammer 7. Damit bildet sich jedoch eine Passage 9 zwischen der Membran 5 und dem Steuerungselement 6 in ihrer Mitte. Durch diese Passage 9 oder allgemein Öffnung zwischen der mittleren Aussparung der Membran 5 und dem Steuerungselement 6 kann das Gas aus der Steuerkammer 7 in die Ablasskammer 8 strömen. Die Ablasskammer 8 ist dabei über eine hier am oberen Ende angeordneten Öffnung mit der Umwelt um den Gasdruckregler 1 verbunden. Dass sich die Passage 9 ab einem gewissen Druck in der Steuerkammer 7 öffnet, führt jedoch dazu, dass ein Drucktest mit einem Druck oberhalb des Werts, bei welchem das Überdruckventil reagiert, nicht möglich ist.

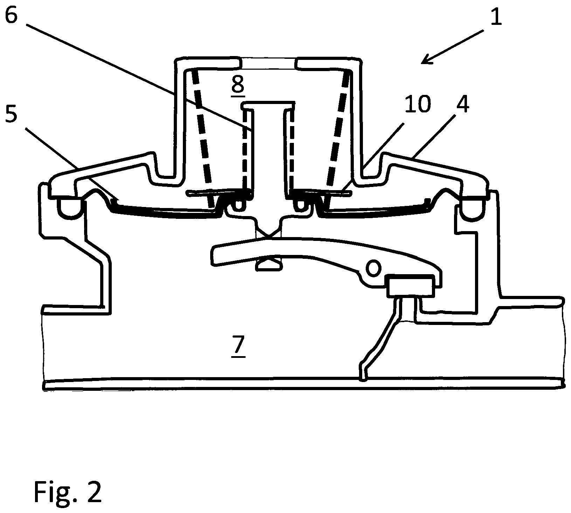

Die Fig. 2 zeigt eine erste Ausgestaltung des erfindungsgemäßen Gasdruckreglers 1, wobei gleiche Komponenten mit gleichen Bezugszeichen wie in der Fig. 1 bezeichnet sind. Um Wiederholungen zu vermeiden, werden daher hier nur die Unterschiede beschreiben.

Der wesentliche Unterschied besteht in dem variabel einsetzbaren Begrenzungselement 10, welches sich hier in der Ablasskammer 8 oberhalb der Membran 5 befindet. Das Begrenzungselement 10 begrenzt dabei in seiner aktivierten Phase die Bewegung der Membran 5 in der Richtung senkrecht auf der Membran 5 bzw. entlang des Steuerungselements 6 bzw. fort von der Steuerkammer 7. Dadurch wird verhindert, dass durch einen Druckanstieg in der Steuerkammer 7 sich die Membran 5 soweit entfernen kann, dass sich die Passage (siehe Fig. 1) öffnen kann. Und dies erlaubt es, einen solchen Druck in der Steuerkammer 7 aufzubringen, wie er für einen Drucktest notwendig ist. Das Begrenzungselement 10 ist in dieser Ausgestaltung eine um das Steuerungselement 6 drehbare Komponente, die nur für den Drucktest in die - hier dargestellte - aktive Position gedreht wird. Hierfür ist z. B. eine Geometrie mit Aussparungen oder Erhebungen vorgesehen, die nur in einer gewissen Anordnung relativ zu den anderen Komponenten oder z. B. relativ zum Gehäuse aktiv für die Wegbegrenzung ist.

In der Fig. 2 befindet sich - in einer ersten Phase - das Begrenzungselement 10 in der Ablasskammer 8 oberhalb der Membran 5 und unterhalb eines Halsbereiches des Gehäuses 4. Bewegt sich die Membran 5 nach oben, so nimmt sie das Begrenzungselement 10 in dieser Richtung nach oben mit. Zu erkennen ist, dass das Begrenzungselement 10 so um das Steuerungselement 6 gedreht ist, sodass es bei einer Bewegung nach oben in den Hals des Gehäuses 4 hineinpasst und daher die Membran 5 nicht in der Bewegung begrenzt.

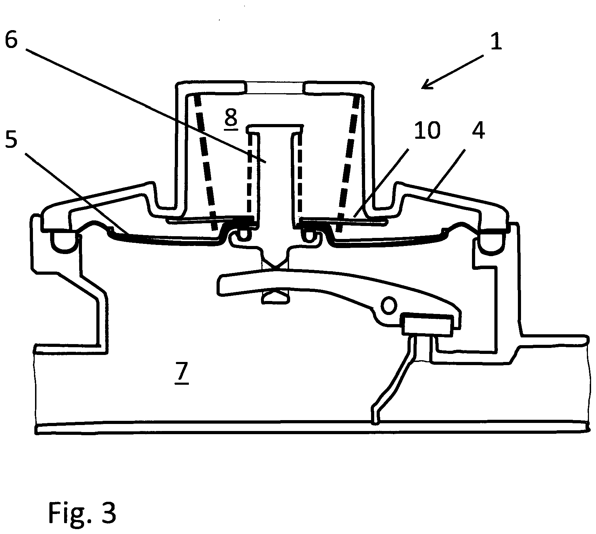

In der Fig. 3 ist eine zweite Phase dargestellt, in welcher in der Steuerkammer 7 ein höherer Druck als in der ersten Phase der Fig. 2 herrscht, der die Membran 5 weiter nach oben auslenkt. Dargestellt ist der Moment, in welchem das nun durch dessen Drehung aktivierte Begrenzungselement 10 gegen das Gehäuse 4 anstößt und damit eine weitere Bewegung der Membran 5 verhindert. Dadurch wird verhindert, dass sich zwischen der Membran 5 und dem Steuerungselement 6 die Passage als Durchgang zwischen Steuerkammer 7 und Ablasskammer 8 öffnet. Dies wiederum erlaubt es, für den Drucktest den Druck in der Steuerkammer 7 weiter zu erhöhen.

Das Begrenzungselement 10 der ersten Ausgestaltung der Fig. 2 und Fig. 3 verfügt somit über eine nicht rotationssymmetrische Ausprägung, sodass eine Drehung das Begrenzungselement 10 aktiviert bzw. in den inaktiven Zustand versetzt.

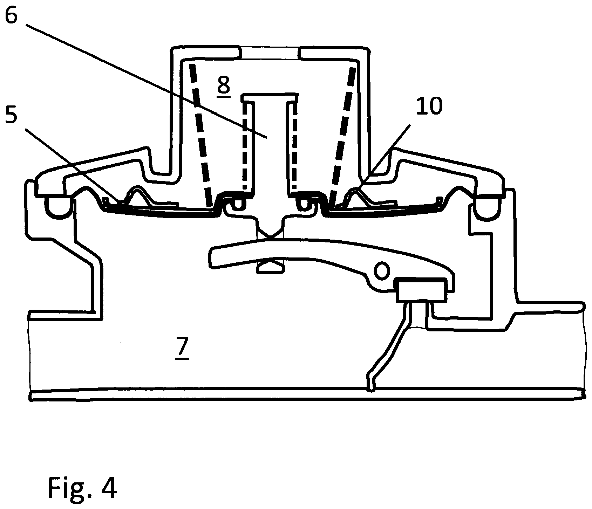

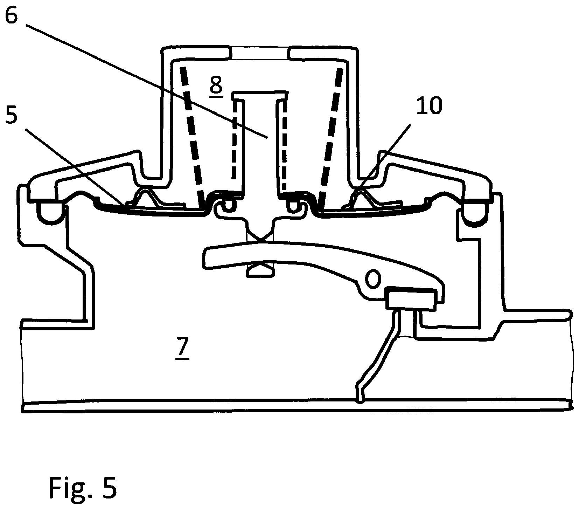

Das Begrenzungselement 10 der zweiten Ausgestaltung der Fig. 4 und Fig. 5 ist radial verschiebbar.

In der Fig. 4 ist das Begrenzungselement 10 so angeordnet, dass es bei einer Druckerhöhung nicht gegen den Hals des Gehäuses anstößt und daher eine weitere Bewegung der Membran in Richtung der Ablasskammer 8 nicht blockiert. Dies ist somit die inaktive Position des Begrenzungselements 10 und auch der normale Betriebszustand des Gasdruckreglers.

In der Fig. 5 ist der aktivierte Zustand des Begrenzungselement 10 dargestellt, wobei ein Abschnitt radial weiter innen und ein anderer Abschnitt radial weiter außen als im inaktivierten Zustand der Fig. 4 angeordnet ist. Dadurch gelangen bei der Druckerhöhung die wellenartigen Abschnitte des Begrenzungselements 10 in Kontakt mit dem Gehäuse und begrenzen damit die axiale Bewegung der Membran 5 entlang des Steuerungselements 6.

In einer weiteren - hier nicht dargestellten - Ausgestaltung ist das Begrenzungselement selbst axial beweglich entlang der Bewegungsachse der Membran bzw. entlang des Steuerungselements ausgestaltet und angeordnet.

### Bezugszeichenliste

- 1: Gasdruckregler
- 2: Einlass
- 3: Auslass
- 4: Gehäuse
- 5: Membran
- 6: Steuerungselement
- 7: Steuerkammer
- 8: Ablasskammer
- 9: Passage
- 10: Begrenzungselement
- **20**: Hebel
- **21**: Dichtelement

## Patentansprüche

1. Gasdruckregler (1),
mit einem Einlass (2), einem Auslass (3), einem Gehäuse (4), einer Membran (5), einer Steuerkammer (7) und einer Ablasskammer (8),
wobei der Einlass (2) und der Auslass (3) jeweils auf die Steuerkammer (7) münden, wobei die Membran (5) die Steuerkammer (7) teilweise begrenzt,
wobei bei einer Position der Membran (5) eine Passage (9) zwischen der Steuerkammer (7) und der Ablasskammer (8) geöffnet ist, und
wobei ein bewegliches Begrenzungselement (10) vorhanden ist,
**dadurch gekennzeichnet,**
**dass** das Begrenzungselement (10) eine Bewegung der Membran (5) fort von der Steuerkammer (7) begrenzt, sodass sich die Passage (9) nicht öffnet,
**dass** das Begrenzungselement (10) zwischen einer aktiven und einer inaktiven Position bewegbar ist, und
**dass** das Begrenzungselement (10) die Bewegung der Membran (5) nur in der aktiven Position begrenzt.

2. Gasdruckregler (1) nach Anspruch 1,
wobei der Gasdruckregler (1) weiterhin ein Steuerungselement (6) aufweist,
wobei die Membran (5) und das Steuerungselement (6) derartig ausgestaltet und in dem Gehäuse (4) derartig angeordnet sind, sodass die Membran (5) und das Steuerungselement (6) relativ zueinander beweglich sind,
wobei bei einer relativen Ablass-Anordnung von Membran (5) und Steuerungselement (6) die Passage (9) zwischen der Steuerkammer (7) und der Ablasskammer (8) geöffnet ist,
wobei das Steuerungselement (6) durch die Membran (5) hindurchragt, und
wobei sich die Passage (9) zwischen dem Steuerungselement (6) und der Membran (5) öffnet.

3. Gasdruckregler (1) nach Anspruch 2,
wobei das Begrenzungselement (10) zwischen der aktiven und der inaktiven Position drehbar um das Steuerungselement (6) ausgestaltet und angeordnet ist,
wobei das Begrenzungselement (10) in der inaktiven Position bei einer Bewegung der Membran (5) fort von der Steuerkammer (7) in einen Halsbereich des Gehäuses (4) hineinpasst, und
wobei das Begrenzungselement (10) in einer aktiven Position bei einer Bewegung der Membran (5) fort von der Steuerkammer (7) gegen das Gehäuse (4) anstößt.

4. Gasdruckregler (1) nach Anspruch 2 oder 3,
wobei das Begrenzungselement (10) zwischen der aktiven und der inaktiven Position radial zum Steuerungselement (6) verschiebbar ausgestaltet und angeordnet ist,
wobei sich das Begrenzungselement in der aktiven Position radial weiter innen oder außen als in der inaktiven Position ist,
wobei das Begrenzungselement (10) in der inaktiven Position bei einer Bewegung der Membran (5) fort von der Steuerkammer (7) nicht gegen einen Hals des Gehäuses (4) anstößt, und
wobei das Begrenzungselement (10) in einer aktiven Position bei einer Bewegung der Membran (5) fort von der Steuerkammer (7) in Kontakt mit dem Gehäuse (4) gelangt.

5. Gasdruckregler (1) nach einem der Ansprüche 2 bis 4,
wobei ein Hebel (20) und ein Dichtelement (21) beweglich in dem Gehäuse (4) angeordnet sind,
wobei sich das Dichtelement (21) zwischen dem Einlass (2) und der Steuerkammer (7) befindet, und
wobei der Hebel (20) mit dem Steuerungselement (6) mechanisch kontaktiert ist.

## Claims

1. A gas pressure regulator (1),
comprising an inlet (2), an outlet (3), a housing (4), a diaphragm (5), a control chamber (7) and a discharge chamber (8),
wherein the inlet (2) and the outlet (3) each open onto the control chamber (7),
wherein the diaphragm (5) partially delimits the control chamber (7),
wherein a passage (9) between the control chamber (7) and the discharge chamber (8) is open in one position of the diaphragm (5), and
wherein a movable limiting element (10) is provided,
**characterized in that**
the limiting element (10) limits a movement of the diaphragm (5) away from the control chamber (7) so that the passage (9) does not open,
**in that** the limiting element (10) is movable between an active and an inactive position, and
**in that** the limiting element (10) limits the movement of the diaphragm (5) only in the active position.

2. The gas pressure regulator (1) according to claim 1,
wherein the gas pressure regulator (1) further has a control element (6),
wherein the diaphragm (5) and the control element (6) are of such a configuration and arranged within the housing (4) such that the diaphragm (5) and the control element (6) are movable relative to each other,
wherein the passage (9) between the control chamber (7) and the discharge chamber (8) is open in a relative discharge arrangement of the diaphragm (5) and the control element (6),
wherein the control element (6) projects through the diaphragm (5), and
wherein the passage (9) opens between the control element (6) and the diaphragm (5).

3. The gas pressure regulator (1) according to claim 2,
wherein the limiting element (10) is configured and arranged so as to be rotatable about the control element (6) between the active and the inactive position,
wherein in the inactive position, the limiting element (10) fits into a neck area of the housing (4) when the diaphragm (5) moves away from the control chamber (7), and
wherein in an active position, the limiting element (10) abuts against the housing (4) when the diaphragm (5) moves away from the control chamber (7).

4. The gas pressure regulator (1) according to claim 2 or 3,
wherein the limiting element (10) is configured and arranged so as to be radially displaceable with respect to the control element (6) between the active and the inactive position,
wherein in the active position, the limiting element is located radially further inwards or outwards than in the inactive position,
wherein in the inactive position, the limiting element (10) does not abut against a neck of the housing (4) when the diaphragm (5) moves away from the control chamber (7), and
wherein in an active position, the limiting element (10) comes into contact with the housing (4) when the diaphragm (5) moves away from the control chamber (7).

5. The gas pressure regulator (1) according to any of claims 2 to 4,
wherein a lever (20) and a sealing element (21) are movably arranged within the housing (4),
wherein the sealing element (21) is located between the inlet (2) and the control chamber (7), and
wherein the lever (20) is in mechanical contact with the control element (6).

## Revendications

1. Régulateur de pression de gaz (1),
comprenant une entrée (2), une sortie (3), un boîtier (4), un diaphragme (5), une chambre de commande (7) et une chambre de décharge (8),
l'entrée (2) et la sortie (3) débouchant chacune sur la chambre de commande (7),
le diaphragme (5) délimitant en partie la chambre de commande (7),
un passage (9) entre la chambre de commande (7) et la chambre de décharge (8) étant ouvert dans une position du diaphragme (5), et
un élément de limitation mobile (10) étant présent,
**caractérisé en ce que**
l'élément de limitation (10) limite un mouvement du diaphragme (5) en éloignement de la chambre de commande (7), de sorte que le passage (9) ne s'ouvre pas,
**en ce que** l'élément de limitation (10) est mobile entre une position active et une position inactive, et
**en ce que** l'élément de limitation (10) limite le mouvement du diaphragme (5) uniquement dans la position active.

2. Régulateur de pression de gaz (1) selon la revendication 1,
le régulateur de pression de gaz (1) présentant en outre un élément de commande (6),
le diaphragme (5) et l'élément de commande (6) étant réalisés de telle sorte et étant agencés de telle sorte dans le boîtier (4) que le diaphragme (5) et l'élément de commande (6) sont mobiles l'un par rapport à l'autre,
le passage (9) entre la chambre de commande (7) et la chambre de décharge (8) étant ouvert dans un agencement relatif de décharge du diaphragme (5) et de l'élément de commande (6),
l'élément de commande (6) faisant saillie à travers le diaphragme (5), et
le passage (9) s'ouvrant entre l'élément de commande (6) et le diaphragme (5).

3. Régulateur de pression de gaz (1) selon la revendication 2,
l'élément de limitation (10) étant réalisé et agencé de manière à être rotatif autour de l'élément de commande (6) entre la position active et la position inactive,
l'élément de limitation (10), dans la position inactive, s'insérant dans une zone de col du boîtier (4) lors d'un mouvement du diaphragme (5) en éloignement de la chambre de commande (7), et
l'élément de limitation (10), dans une position active, butant contre le boîtier (4) lors d'un mouvement du diaphragme (5) en éloignement de la chambre de commande (7).

4. Régulateur de pression de gaz (1) selon la revendication 2 ou 3,
l'élément de limitation (10) étant réalisé et agencé de manière à être déplaçable radialement par rapport à l'élément de commande (6) entre la position active et la position inactive,
l'élément de limitation, dans la position active, se trouvant radialement plus à l'intérieur ou à l'extérieur que dans la positon inactive,
l'élément de limitation (10), dans la position inactive, ne butant pas contre un col du boîtier (4) lors d'un mouvement du diaphragme (5) en éloignement de la chambre de commande (7), et
l'élément de limitation (10), dans une position active, parvenant en contact avec le boîtier (4) lors d'un mouvement du diaphragme (5) en éloignement de la chambre de commande (7).

5. Régulateur de pression de gaz (1) selon l'une des revendications 2 à 4,
un levier (20) et un élément d'étanchéité (21) étant agencés mobiles dans le boîtier (4),
l'élément d'étanchéité (21) se trouvant entre l'entrée (2) et la chambre de commande (7), et
le levier (20) étant en contact mécanique avec l'élément de commande (6).
